# EUROPEAN PATENT APPLICATION

(11) **EP 1 675 061 A1**
(43) Date of publication of application: **28.06.2006**
(21) Application number: 05111770.3
(22) Date of filing: 07.12.2005
(51) Int. Cl.: G06Q 30/00

(54) **A method and apparatus for marketing using templates, lists and activities**

(30) Priority: 22.12.2004 US 20447
(71) Applicant: MICROSOFT CORPORATION, Redmond, Washington 98052-6399 (US)
(72) Inventor: Kumar, Amit, Redmond, WA 98052 (US); LaSalle, Derek, Redmond, WA 98052 (US); Rajasekaran, Kulo, Redmond, WA 98052 (US); Thomas, Liju, Redmond, WA 98052 (US); Gupta, Prashant, Redmond, WA 98052 (US); Bhatia, Rohit, Redmond, WA 98052 (US)
(74) Representative: Zimmer, Franz-Josef

(57) **Abstract**

The method may include creating a marketing campaign, selecting a list to receive the marketing campaign, allowing the user to modify the list selected, allowing the user to add a work item to the marketing campaign and executing the marketing campaign.

## Description

### Background

Creating useful targets for marketing campaigns has long been a goal of marketers. Marketing is wasted unless it is received by someone that is interested in the marketing campaign. Large inefficiencies exist in locating and targeting prospecting customers, even if data on potential customers is easily available. Even if such data is available, oftentimes the process of attaching the marketing to data is cumbersome and inefficient.

### Summary

A method of marketing to lists where lists are first order objects is disclosed. The method may include creating a marketing campaign, selecting a list to receive the marketing campaign, allowing the user to modify the list selected, allowing the user to add a work item to the marketing campaign and executing the marketing campaign. The method may also include allowing different work items to be added to different lists in the same campaign and allowing a campaign to operate for multiple lists. The method may also include creating the campaign using a template where the template may be modified and may have fields that obtain information obtained from a separate source and display the information in the template. Also, work items may include at least one of emails, direct mail, telephone calls, faxes, newspaper advertisements, electronic advertisements, and internet advertisements. Lists may be first order objects and contain contacts of a same type and contain a subset of contacts that satisfy a particular query. A computer readable medium with computer executable instructions to perform the method is also disclosed as is a computing apparatus with a processing apparatus that is programmed to perform the method.

### Drawings

Fig. 1 is a block diagram of a computing system that may operate in accordance with the claims;

Fig. 2 is an illustration of a method of marketing to lists;

Fig. 3 is another illustration of a method of marketing to lists;

Fig. 4 is an illustration of a display where a user may be permitted to select multiple target lists for a campaign; and

Fig. 5 is an illustration of lists that have been selected to be part of the campaign.

### Description

**[0001]** Although the following text sets forth a detailed description of numerous different embodiments, it should be understood that the legal scope of the description is defined by the words of the claims set forth at the end of this patent. The detailed description is to be construed as exemplary only and does not describe every possible embodiment since describing every possible embodiment would be impractical, if not impossible. Numerous alternative embodiments could be implemented, using either current technology or technology developed after the filing date of this patent, which would still fall within the scope of the claims.

**[0001]** It should also be understood that, unless a term is expressly defined in this patent using the sentence "As used herein, the term ' ' is hereby defined to mean..." or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term by limited, by implication or otherwise, to that single meaning. Finally, unless a claim element is defined by reciting the word "means" and a function without the recital of any structure, it is not intended that the scope of any claim element be interpreted based on the application of 35 U.S.C. § 112, sixth paragraph.

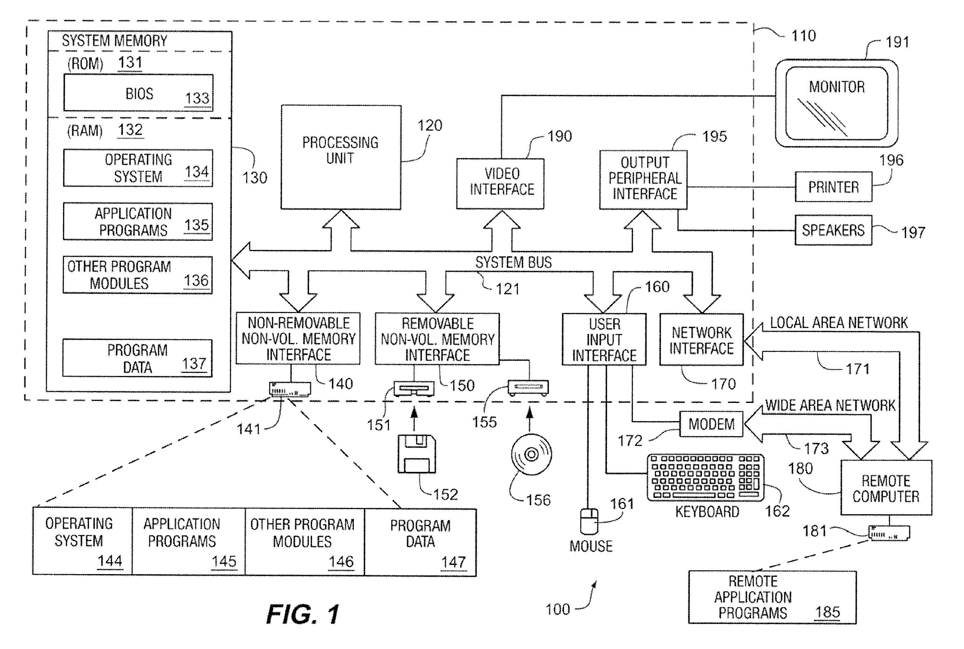

Fig. 1 illustrates an example of a suitable computing system environment 100 on which a system for the claimed method and apparatus may be implemented. The computing system environment 100 is only one example of a suitable computing environment and is not intended to suggest any limitation as to the scope of use or functionality of the method of apparatus of the claims. Neither should the computing environment 100 be interpreted as having any dependency or requirement relating to any one or combination of components illustrated in the exemplary operating environment 100.

The claimed method and apparatus are operational with numerous other general purpose or special purpose computing system environments or configurations. Examples of well known computing systems, environments, and/or configurations that may be suitable for use with the methods or apparatus of the claims include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The claimed method and apparatus may be described in the general context of computer-executable instructions, such as program modules, being executed by a computer. Generally, program modules include routines, programs, objects, components, data structures, etc. that perform particular tasks or implement particular abstract data types. The methods and apparatus may also be practiced in distributed computing environments where tasks are performed by remote processing devices that are linked through a communications network. In a distributed computing environment, program modules may be located in both local and remote computer storage media including memory storage devices.

With reference to Fig. 1, an exemplary system for implementing the claimed method and apparatus includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Fig. 1 illustrates operating system 134, application programs 135, other program modules 136, and program data 137.

The computer 110 may also include other removable/non-removable, volatile/nonvolatile computer storage media. By way of example only, Fig. 1 illustrates a hard disk drive 140 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in Fig. 1, provide storage of computer readable instructions, data structures, program modules and other data for the computer 110. In Fig. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 20 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Fig. 1. The logical connections depicted in Fig. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Fig. 1 illustrates remote application programs 185 as residing on memory device 181. It will be appreciated that the network connections shown are exemplary and other means of establishing a communications link between the computers may be used.

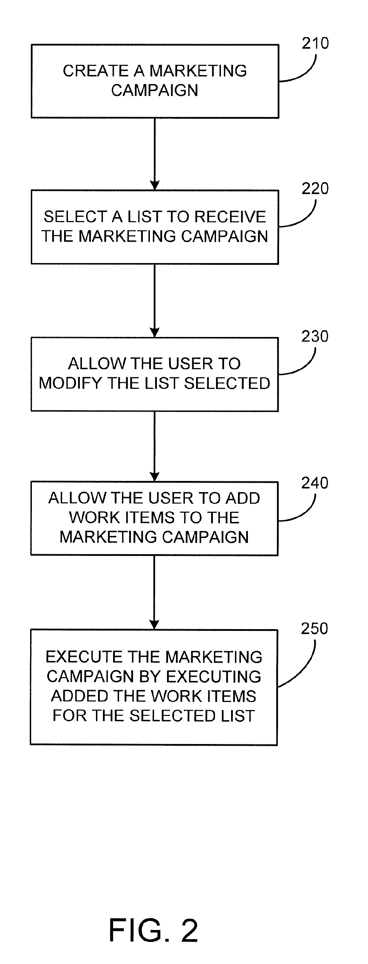

Fig. 2 may be an illustration of a method of marketing to lists where lists are first order objects. At block 210, a marketing campaign may be created. The marking campaign may be created using a template. A template may be a form with numerous fields that may be filled in by retrieving data from another data source. In addition, additional fields may be added to the template. These fields may be filled in from data from another source or may be filled in by the user. A user may be allowed to modify the template. For example, a user may be permitted to add more fields to the template, may be permitted to add graphics to the template, or virtually any other activity that may be permitted in a modem word processing program such as changing a font, changing colors, adding graphics, etc. In addition, the campaign may be created without using a template.

At block 220, a user may be permitted to select a list to receive a marketing campaign. A marketing campaign may be a variety of different tasks. For example, one marketing campaign may be sending emails to perspective clients. Another example would be sending faxes to existing clients advising them of a sale. A list may be a first order object that contains contacts. As a list is a first order object, it can be passed as a variable, it can be sent as an email, it can be queried, it can be modified, just like any other first order object.

In addition, multiple lists can be added to receive a marketing campaign and the lists may not have to be of the same type. For example, a list of lead and a list of existing contacts and accounts may be sent an email about a new promotion. There may be no limit to the mixture of lists that may be created and attached to a marketing campaign.

At block 230, a user may be allowed to modify the list selected. For example, a user may be permitted to run an additional query on the list selected to further narrow down the list, or the user may be permitted to index through the members of the list and remove or add additional members as the user may desire.

At block 240, a user may be allowed to add work items to the marketing campaign. Work items may be sending an email, sending a fax, sending mail, or making a phone call. Further, the work items may be planning activities such as getting a budget approved, getting marketing material developed, identify potential new vendors, etc. These work items may be modeled as activities which can be assigned and scheduled. Other work items are permitted.

At block 250, the marketing campaign may be executed. This block may entail executing the work items attached to the marketing campaign at block 240. For example, if the work item was to send the email, the emails would be sent. In addition, the list may include types such as accounts, leads and contacts.

As part of the same campaign, different work items can be added to different lists in the same campaign. For example, if the campaign is to increase sales, certain contacts may receive an email as part of a campaign while other contacts may receive a piece of first class mail as part of the same campaign. In addition, work items may further include emails, direct mail, telephone calls, faxes, newspaper advertisements, electronic advertisements, and internet advertisements. Further, the campaign may operate on subsets of the lists which may allow for a more targeted campaign. For example, a list of existing customers may be part of a campaign, but key existing customers may be attached to different work items than non-key customers.

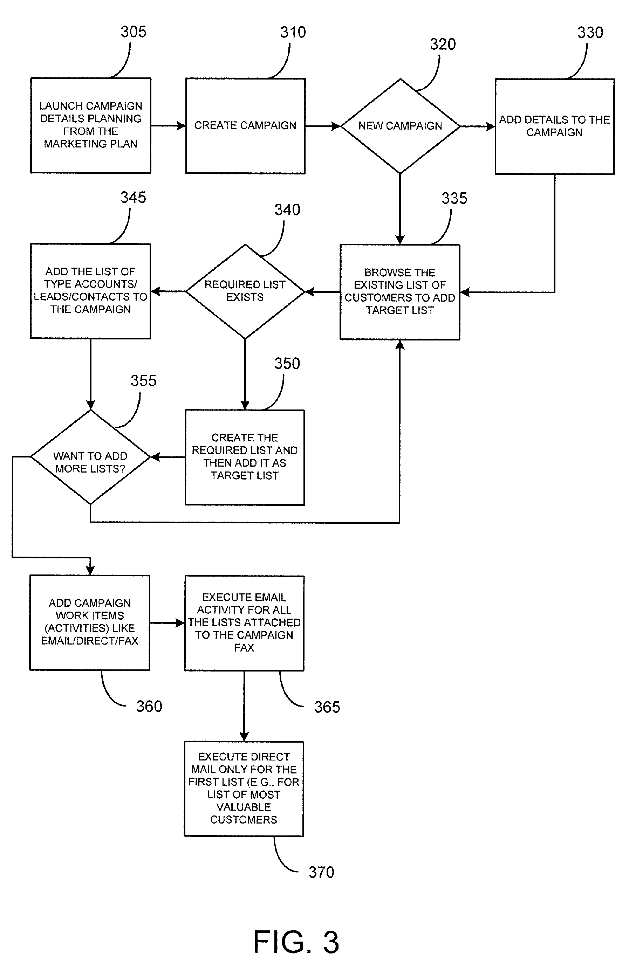

Fig. 3 may illustrate a more detailed description of a method in accordance with the claims. At block 305, campaign details may be launched from the marketing plan. The campaign details may be a variety of different of campaigns, such as to increase sales, increase collections, to increase sales of a particular item, to attempt to obtain new customers, to attempt to obtain additional orders from the existing customers, etc.

At block 310, a new campaign may be created. The manner in which a campaign is created may take numerous forms. The campaign may use existing templates to execute the campaign. In addition, the campaign may be entirely new and unrelated to any previous campaign or the campaign may be a copy of a historic campaign.

At block 320, there may be a decision to add details to the campaign. At block 330, additional details may be added to the campaign. For example, customers who had sales in the previous year of over a million dollars may be the desired target of the marketing campaign. At block 335, the list of existing customers may be added to the target list. At block 340, a decision may be made whether the required list already exists. If the list already exists, control may pass to block 345 where the list of the types such as accounts, leads and contacts are added to the campaign. If the list does not exist, control may pass to block 350 where the required list may be created and added to the target list. Control then may pass to block 355 where a decision is made whether to add more lists to the campaign. If more lists are desired to be added, control may pass to block 335 where the list may be browsed and added to the target list. If enough lists have already been added to the campaign, control may pass to block 360 where campaign work items may be added. Campaign work items may include email, fax, internet advertisements, etc. as previously displayed.

At block 365, the work activities may be executed. In this example, the campaign may include a first activity for all members of the list which would be to send an email as described in block 365 and at block 370, direct mail may be sent to the most valuable customers. The most valuable customers may be a separate list from the general customer list.

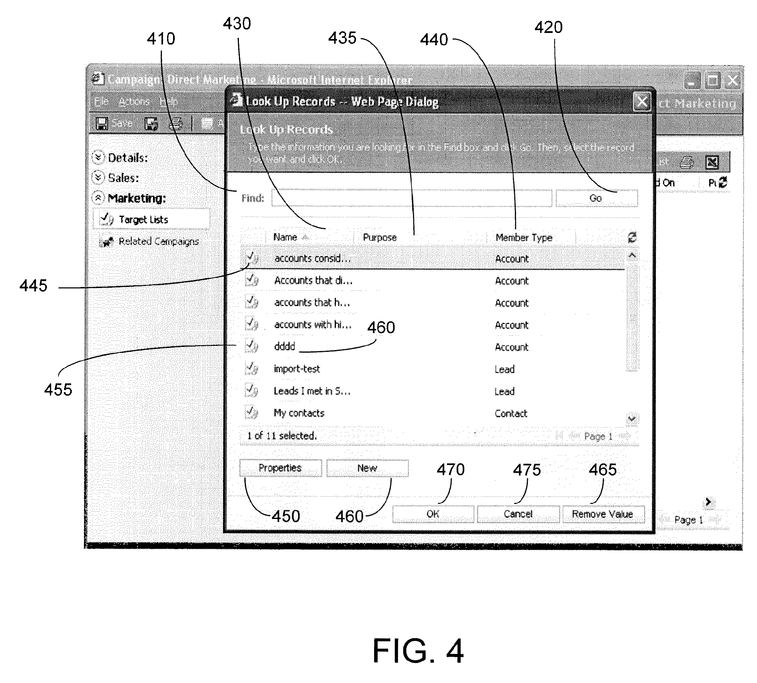

Fig. 4 may be an illustration of a display where a user may be permitted to select multiple target lists for a campaign. A user may be permitted to look up records in a variety of ways. For example, a user may be able to type in the find box 410 information that the user is seeking. By selecting the go button, relevant lists related to the information that the user is seeking may be displayed. The names of the list 430, the purpose of the list 435, and the member type 440 may be displayed. By highlighting a list such as list account considered 445, the user may select to see additional properties related to the list by selecting the properties button 450. In addition, a user may be permitted to select or unselect a list to be part of a campaign by adding a checkmark next to the list, such as the checkmark 455 next to the list dddd 460. In addition, the user may be permitted to add a new list to be viewed by selecting the new button 460. In addition, the user may be permitted to remove the list from the campaign by selecting the remove value list 465. Once a user is satisfied that sufficient lists have been added to the campaign, the user can select the ok button 470, or if the user prefers to move back and start over on the marketing campaign, the user can select the cancel button 475.

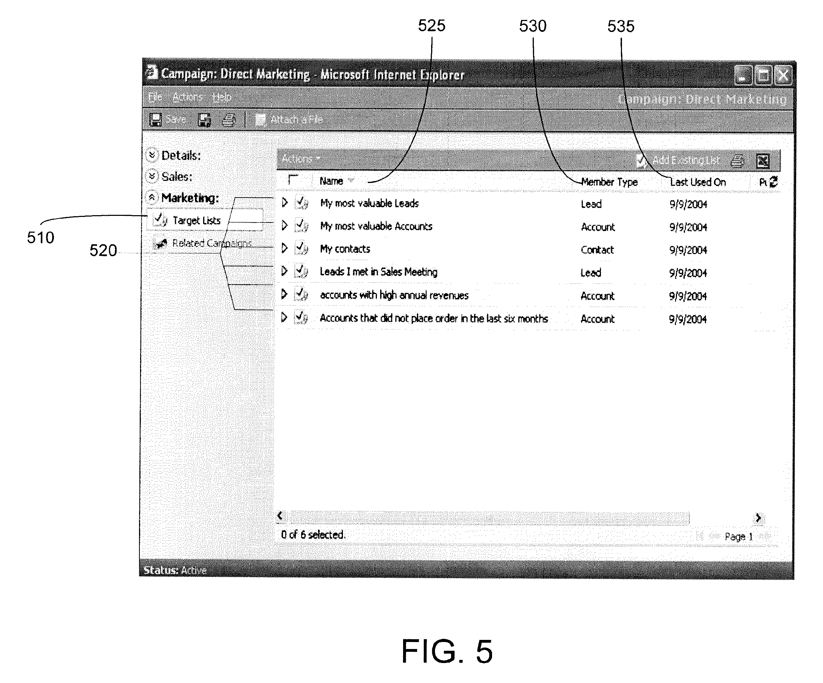

Fig. 5 may illustrate lists that have been selected to be part of the campaign. The user may select the target list tab 510 and element 520 may be a display of the list selected. As can be seen, the list can be sorted by their name 525, their member type 530, or the date on which they were last used 535. Also, it can be seen that the member types can be a variety of different types such as leads, accounts and contact, all of which can be associated with the same campaign. As a further example, the marketing campaign may be directed to increasing sales. A user may review all the lists that he has created previously and select certain leads, accounts and contacts that he wishes to be part of the campaign. A first part of the campaign may send an email to all the lists telling the selected leads, accounts and contacts that a sale is going to occur at the business. In addition, a second aspect of the campaign may result in direct mail being sent to the largest fifty accounts. In addition, direct mail may be sent to the fifty largest leads of the user and may be sent to the fifty most important contacts of the user. As can be seen, different work activities can be associated with different lists and these lists can be of contacts, accounts and leads.

Although the forgoing text sets forth a detailed description of numerous different embodiments, it should be understood that the scope of the patent is defined by the words of the claims set forth at the end of this patent. The detailed description is to be construed as exemplary only and does not describe every possible embodiment because describing every possible embodiment would be impractical, if not impossible. Numerous alternative embodiments could be implemented, using either current technology or technology developed after the filing date of this patent, which would still fall within the scope of the claims.

Thus, many modifications and variations may be made in the techniques and structures described and illustrated herein without departing from the spirit and scope of the present claims. Accordingly, it should be understood that the methods and apparatus described herein are illustrative only and are not limiting upon the scope of the claims.

## Claims

1. A method of marketing to lists where lists are first order objects comprising:
creating a marketing campaign;
selecting a list to receive the marketing campaign;
allowing the user to modify the list selected;
allowing the user to add a work item to the marketing campaign; and
executing the marketing campaign by executing the added work items on the selected list.

2. The method of claim 1, further comprising allowing different work items to be added to different lists in the same campaign.

3. The method of claim 1, further comprising creating the marketing campaign using a template, wherein the template can be modified and has fields that obtain information obtained from a separate source and display the information in the template.

4. The method of claim 1, further comprising allowing a campaign to operate for multiple lists.

5. The method of claim 1, wherein lists are first order objects and contain objects of a same type.

6. The method of claim 1, wherein lists contain a subset of contacts that satisfy a particular query.

7. The method of claim 1, wherein the work items are activities that can be tracked, assigned and scheduled.

8. A computing apparatus, comprising:
a display unit that is capable of generating video images;
an input device;
a processing apparatus operatively coupled to said display unit and said input device, said processing apparatus comprising a processor and a memory operatively coupled to said processor,
a network interface connected to a network and to the processing apparatus;
said processing apparatus being programmed to market to lists where lists are first order objects comprising:
said processing apparatus being programmed to create a marketing campaign;
said processing apparatus being programmed to select a list to receive the marketing campaign;
said processing apparatus being programmed to allow the user to modify the list selected;
said processing apparatus being programmed to allow the user to add a work item to the marketing campaign; and
said processing apparatus being programmed to execute the marketing campaign by executing the added work items on the selected list..

9. The method of claim 8, further comprising said processing apparatus being programmed to allow different work items to be added to different lists in the same campaign.

10. The computing apparatus of claim 8, further comprising said processing apparatus being programmed to create the campaign using a template, wherein the template can be modified and has fields that obtain information obtained from a separate source and display the information in the template.

11. The computing apparatus of claim 8, further comprising said processing apparatus being programmed to allow a campaign to operate for multiple lists.

12. The computing apparatus of claim 8, wherein lists are first order objects and contain contacts of a same type.

13. The computing apparatus of claim 8, wherein lists contain a subset of contacts that satisfy a particular query.

14. A computer readable medium having computer executable instructions for performing a method of marketing to lists where lists are first order objects comprising:
computer executable instructions for creating a marketing campaign;
computer executable instructions for selecting a list to receive the marketing campaign;
computer executable instructions for allowing the user to modify the list selected; computer executable instructions for allowing the user to add a work item to the marketing campaign; and
computer executable instructions for executing the marketing campaign

15. The computer readable medium of claim 14, further comprising computer executable instructions for allowing different work items to be added to different lists in the same campaign.

16. The computer readable medium of claim 14, further comprising computer executable instructions for creating the campaign using a template wherein the template can be modified and has fields that obtain information obtained from a separate source and display the information in the template.

17. The computer readable medium of claim 14, wherein the work item comprises at least one of emails, direct mail, telephone calls, faxes, newspaper advertisements, electronic advertisements, and internet advertisements.

18. The computer readable medium of claim 14, further comprising computer executable instructions for allowing a campaign to operate for multiple lists.

19. The computer readable medium of claim 14, wherein lists are first order objects and contain contacts of a same type.

20. The computer readable medium of claim 14, wherein lists contain a subset of contacts that satisfy a particular query.
